Europäisches Patentamt

European Patent Office

Office européen des brevets

(11) Publication number: **0 405 721 A1**

# EUROPEAN PATENT APPLICATION

(21) Application number: 90304577.1

(22) Date of filing: 26.04.90

(51) Int. Cl.5: **C09J 175/04, C08G 18/10, C09J 5/08, //(C09J175/04, 183:12)**

(30) Priority: **19.05.89 GB 8911592**

(43) Date of publication of application:
**02.01.91 Bulletin 91/01**

(84) Designated Contracting States:
**DE ES FR GB IT SE**

(71) Applicant: **BOSTIK LIMITED**
**Ulverscroft Works Ulverscroft Road**
**Leicester LE4 6BW(GB)**
(84) **GB**

Applicant: **BOSTIK FRANCE SA**
**12 rue Truillot**
**F-94203 Ivry-sur-Seine(FR)**
(84) **ES**

Applicant: **Bostik GmbH**
**Gattenhöferweg 36**
**D-6370 Oberursel(DE)**
(84) **DE**

Applicant: **BOSTIK AB**
**Strandbadsvaegen**
**S-25229 Helsingborg(SE)**
(84) **SE**

(72) Inventor: **Gilch, Heinz Gerhard**
**Holderlinweg 17a**
**D-6380 Bad Homburg(DE)**
Inventor: **Rath, Walter**
**Wiesenstrasse 11**
**D-6370 Oberursel 5(DE)**
Inventor: **Seitz, Karsten**
**Kolbenbergweg 1**
**D-6370 Oberursel 1(DE)**

(74) Representative: **Harrison, Gordon Donald et al**
**FORRESTER & BOEHMERT**
**Widenmayerstrasse 4/I4/I**
**D-8000 München 22(DE)**

(54) **Moisture-curing, hot-melt polyurethane adhesive compositions.**

(57) A moisture-curing hot-melt polyurethane adhesive foam comprising isocyanate-terminated polyurethane prepolymers based on polyester or polyether and having a melting point of 40° to 60° C or a glass transition point above room temperature, melted together, optionally with a nucleating agent and/or a surfactant, treated with an inert gas under pressure and released in ambient pressure is allowed to cure as a foam whereby a cure rate is achieved of at least ten times that of the composition when not foamed. Extremely rapid cure rates are achieved and thick bond lines are readily obtained.

EP 0 405 721 A1

## MOISTURE-CURING, HOT-MELT POLYURETHANE ADHESIVE COMPOSITIONS

The present invention relates to moisture-curing, hot-melt polyurethane adhesive compositions with enhanced curing rates.

The uses of moisture-curing, hot-melt polyurethane adhesives is constrained by the time taken to achieve adequate mechanical strength. Many users find the cure rate of moisture-curing hot-melt polyurethane to be too slow, especially when applied in thicker layers. We have found that foaming of these adhesives leads to materials which show a dramatic increase in cure rate.

According to the present invention a moisture-curing, hot-melt, polyurethane adhesive composition comprising isocyanate-terminated polyurethane prepolymers based on polyester or polyether and having a melting point of $40°$ - $60°$ C or a phase transition point above room temperature is characterised in that the composition is produced as a foam by introducing an inert gas under pressure to the molten composition and releasing the resulting composition to ambient pressure, the resultant foam being allowed to cure whereby a cure rate is achieved of at least ten times, and preferably at least one hundred times, the cure rate of the composition when not foamed. At least one surfactant and/or at least one nucleating agent may be included in the composition in order to optimise foam quality.

German patent specification DE 27 33 847 discloses foaming of melt adhesives by mixing with a gas, optionally when the adhesive is molten, so that the gas is dissolved and then releasing the pressure so that the gas comes out of solution to form an adhesive foam. It is claimed that this foaming of the adhesive enhances spreading and wet-out so that bond strength is improved and/or that the amount of adhesive required to provide a bond is reduced. However, there is no teaching whatsoever concerning curing rate and no one would have been led to predict a dramatic change in the rate of curing of such hot-melt adhesives, particularly polyurethane compositions.

The isocyanate-terminated polyurethane prepolymers used in the present invention are based on polyester or polyether and have a melting point of $40°$-$60°$ C or a glass transition point above room temperature. Prepolymers based on polyether have a glass transition point above room temperature.

Surfactant may be included in an amount of 0.01 wt% to 5 wt%, preferably 0.05 wt% to 1 wt%. Polysiloxane-polyether-block-copolymers are preferred surfactants for use in the present invention.

Nucleating agents such as oxides such as titanium dioxide, fumed silica or carbon black may be used in the present invention. Fumed silica is a preferred nucleating agent, used in amounts of 0.01 wt% to 5 wt%, preferably 0.05 wt% to 0.5 wt%.

Nitrogen, rare gases, carbon dioxide or halogenated hydrocarbons are suitable for use as inert gases in the present invention.

The foamed polyurethane hot-melts cure very much faster than unfoamed materials. Cure rate of foamed materials according to the invention may exceed 1mm/hour whereas the cure rate of unfoamed material is lower than 1mm/week.

The use of nucleating agents and surfactants produce more uniform adhesive foams with accelerated cure rate.

The foams produced according to the present invention have a closed surface and a density in the range 0.1-1.0 g/cm³, preferably 0.3-0.8 g/cm³. The bubble diameters are in the range 50-2000μ, preferably 100-500μ.

The mechanical properties of the foamed materials change considerably during the curing process. Uncured foams have only a very limited resistance to mechanical stresses. Foam collapse or material break occurs when uncured foams are exposed to compressive forces or when a supporting substrate such as a beam is deflected, whereas cured foams can be exposed to much higher forces without destruction. Furthermore, they often recover after the stresses are removed as is shown hereunder.

To produce foam in accordance with the present invention, moisture-curing hot-melt polyurethane adhesive is melted, optionally together with surfactant and/or nucleating agent, in a reaction vessel and inert gas is dissolved in the resultant melt while it is stirred. A suitable reaction vessel is described in DE 27 33 847 and can be obtained from Nordson Corp. When the melt is then discharged and the pressure removed, a molten foam results. The hot molten foam can then be applied to substrates as adhesive. After joining substrates, cooling of the foam below its melting point or glass transition point provides initial bond strength after a very short time. Subsequent cure by diffusion of moisture into the materials leads to the development of the final strength of the bond.

Such foamed polyurethane adhesives offer advantages over unfoamed adhesives, especially when porous or uneven substrates are bonded, because the presence of the gas bubbles in the foam prevents the polymer from sagging into small pores while at the same time forces it into big gaps.

Another advantage is the possibility of establishing very thick bond lines which may be required in certain applications. This is due to the fact that foamed melt adhesives have a strongly decreased tendency to flow off.

The present invention may be used with a quick-setting polyurethane adhesive composition comprising a mixture of at least two amorphous polyurethane prepolymers, each prepolymer providing a different glass transition temperature, preferably one prepolymer with a glass transition temperature above room temperature and a second prepolymer with a glass transition temperature below room temperature. Such compositions are described and claimed in our copending European patent application 89 303222.7.

The present invention may also be used with a quick-setting, hot-melt polyurethane composition comprising a mixture of at least two polyurethane prepolymers including a first polyether-base polyurethane prepolymer having a glass transition temperature above room temperature and a second polymer or polyurethane prepolymer with a glass transition temperature below room temperature. Such compositions are described and claimed in our copending European patent application 83 10604.7.

In order that the present invention be better understood, preferred Examples will hereinafter be described in greater detail.


EXAMPLE 1

A mixture of 78 g methylene diphenyl diisocyanate, 1.47 g tosylisocyanate and 571 g hexanediol adipate (mwt. approx. 3000) was reacted in a pressure vessel equipped with an efficient stirrer and heating means and having a gas inlet and outlet. The mixture was stirred for one hour at 80°C, then 0.57 g of dibutyltin laurate were added as catalyst, followed by 0.65 g polysiloxane-polyether-blockcopolymer as surfactant and 0.66 g fumed silica as nucleating agent.

At a temperature of 100°C, the reaction vessel was pressurised with 8-10 atm of dry nitrogen and the rate of stirring increased to 500-700 rpm. Vigorous stirring was maintained for 30 min, then the bottom outlet of the vessel was opened and the molten material released. This resulted in a molten foam, having a density of 0.67 g/cm³ (RT) and which was stable for several hours at 100°C.

Bubble diameters were in the range of 50 - 1000μ, with a considerable number of open cells. The foam had a smooth surface. Blocks of this foam showed a cure rate of 1 mm/h at room temperature and approx. 50% relative humidity. Material produced in the same fashion but without foaming cured with a speed of less than 1 mm/week.

Mechanical properties of the foamed material in the uncured and in the cured state may be compared:

| (Measurements carried out at room temperature) | | |
|---|---|---|
| Stress-strain behaviour (compression) in accordance with DIN 53423: | | |
| | Stress $(N/mm^2)$ | Strain (%) |
| Uncured Material | 3.2 > 3.2 | 8-10 collapse |
| Cured Material | 9.3 2.8 | 50 10 |
| Maximum deflection of a beam in accordance with DIN 53421: | | |
| | Load (N) | Deflection (mm) |
| Uncured Cured | 230 312 | 6*) 22**) |

*) Material break
**) Material recovered after unloading

The inclusion of surfactant and nucleating agent produces a foam of excellent quality but for some uses foam of acceptable quality can be produced when the surfactant and/or the nucleating agent are omitted.

## EXAMPLE 2

The preparation described in Example 1 was repeated except that the polysiloxane-polyether-block copolymer (surfactant) was not included. The resulting foam had a density of 0.65 $g/cm^3$ and showed a cure rate of 0.5 - 1.0 mm/h at room temperature and 50% Relative Humidity.

## EXAMPLE 3

The same preparation described in Examples 1 and 2 was repeated, this time omitting both the polysiloxane-polyether block copolymer (surfactant) and the fumed silica (nucleating agent). The resulting foam had a density of 0.70 $g/cm^3$ and a cure rate of 0.5 - 1.0 mm/h at room temperature and 50% Relative Humidity.

## EXAMPLE 4

The preparation described in Example 1 was repeated except that in this case 0.65g polysiloxane-polyether block copolymer was included but the fumed silica (nucleating agent) was omitted. The resulting foam had a density of 0.62 $g/cm^3$ and a cure rate of 0.5 - 1.0 mm/h at room temperature and 50% Relative Humidity.

The foams produced in Examples 2, 3 and 4 showed the same kind of properties as the foam produced in Example 1 and had the same kind of advantages when compared with materials of the same composition produced without foaming.

## Claims

1. A moisture-curing, hot-melt, polyurethane adhesive composition comprising isocyanate-terminated polyurethane prepolymers based on polyester or polyether and having a melting point of 40°-60° C or a phase transition point above room temperature characterised in that the composition is produced as a foam by introducing an inert gas under pressure to the molten composition, and releasing the resulting composition to ambient pressure the resultant foam being allowed to cure whereby a cure rate is achieved of at least ten times, and preferably at least one hundred times, the cure rate of the composition when not foamed.

2. A hot-melt polyurethane composition according to claim 1 wherein the composition comprises at least one surfactant.

3. A hot-melt polyurethane composition according to claim 2 comprising surfactant in an amount of 0.01 wt% to 5 wt%, preferably 0.05 wt% to 1 wt%.

4. A hot-melt polyurethane composition according to claims 2 or 3, comprising polysiloxane-polyether-block-copolymers.

5. A hot-melt polyurethane composition according to any one of claims 1 to 3 wherein the composition comprises at least one nucleating agent.

6. A hot-melt polyurethane composition according to claim 5 wherein the nucleating agent is an oxide, fumed silica or carbon black.

7. A hot-melt polyurethane composition according to claim 5 or 6 wherein the nucleating agent is fumed silica present in an amount in the range 0.01 wt% to 5 wt%, preferably 0.05 wt% to 0.5 wt%.

8. A hot-melt polyurethane foam according to any one of the preceding claims having a density of 0.1 to 1.0 $g/cm^3$, preferably 0.3 to 0.8 $g/cm^3$.

9. A hot-melt polyurethane foam according to any one of the preceding claims having bubble diameters in the range 50-2000μ, preferably 100-500μ.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 137 638 (BOSTIK LTD) * Claims 1,11-14; page 4, lines 36-40,61-65 * --- | 1 | C 09 J 175/04 C 08 G 18/10 C 09 J 5/08 // (C 09 J 175/04 C 09 J 183:12 ) |
| A | EP-A-0 125 582 (HENKEL) * Claims 1,3-5; page 5, line 28 - page 6, line 20 * ----- | 1 | |

TECHNICAL FIELDS SEARCHED (Int. Cl.5)

C 09 J
C 08 G

The present search report has been drawn up for all claims

| Place of search | Date of completion of the search | Examiner |
|---|---|---|
| THE HAGUE | 17-09-1990 | VAN PUYMBROECK M.A. |